# EUROPÄISCHE PATENTSCHRIFT

(11) **EP 3 510 456 B1**
(45) Veröffentlichungstag und Bekanntmachung des Hinweises auf die Patenterteilung: **05.10.2022**
(21) Anmeldenummer: 17752290.1
(22) Anmeldetag: 14.08.2017
(51) Int. Cl.: G05B 19/418

(54) **VERFAHREN ZUM MONTIEREN EINES OBJEKTS**
METHOD FOR ASSEMBLING AN OBJECT
PROCÉDÉ DE MONTAGE D'UN OBJET

(30) Priorität: 10.09.2016 DE 102016010983
(43) Veröffentlichungstag der Anmeldung: 17.07.2019
(73) Patentinhaber: Audi AG, 85045 Ingolstadt (DE); AUDI HUNGARIA Zrt., 9027 Györ (HU)
(72) Erfinder: SCHMIDT, Jörg, 85057 Ingolstadt (DE); MIKOS, Ádám, 9900 Körmend (HU); PAULOVICS, Tamás, 9026 Györ (HU); HORNBERGER, Szabina, 9027 Györ (HU); RÁTHY, István, 9023 Györ (HU); KERN, Wolfgang, 85055 Ingolstadt (DE); PISZCZEK, Pascal, 85053 Ingolstadt (DE); RUSITSCHKA, Fabian, 85051 Ingolstadt (DE)
(74) Vertreter: Raible Deissler Lehmann Patentanwälte PartG mbB
(86) Internationale Anmeldenummer: PCT/EP2017/000974
(87) Internationale Veröffentlichungsnummer: WO 2018/046116

(56) Entgegenhaltungen:
- DE-A1-102010 032 876
- DE-A1-102013 000 569
- KERN, WOLFGANG; RUSITSCHKA, FABIAN; BAUERNHANSL, THOMAS: "Planning of Workstations in a Modular Automotive Assembly System", PROCEEDINGS OF THE 49TH CIRP CONFERENCE ON MANUFACTURING SYSTEMS, Bd. 57, 26. Mai 2016 (2016-05-26), Seiten 327-332, XP002773943,

## Beschreibung

Die Erfindung betrifft ein Verfahren und ein System zum Montieren einer Vorrichtung.

Für eine Bereitstellung von Material bei einer Montage einer Vorrichtung, bspw. eines Motors eines Kraftfahrzeugs, in verschiedenen Montagestationen, stehen verschiedene Konzepte zur Verfügung. Dabei kann das Material den Montagestationen in Behältern bereitgestellt werden, wobei ein Mitarbeiter oder eine Maschine für eine Montagestation das passende Material bzw. vorgesehene Bauteile aus dem passenden Behälter aussucht. Bei hoher Varianz von zu verbauenden Bauteilen ist dafür eine große Bereitstellungsfläche erforderlich. Neigt sich der Inhalt eines Behälters dem Ende zu, so muss ein neuer voller Behälter angefordert werden. Alternative Maßnahmen zur Bereitstellungen von Material bzw. von Bauteilen sehen eine Versorgung "just in time" oder "just in sequence" vor, bei denen das Material zum richtigen Zeitpunkt oder in der richtigen Sequenz bereitgestellt wird. In beiden Fällen wird die Materialbereitstellungsfläche reduziert. Der Mitarbeiter oder die Maschine müssen nicht aus Behältern auswählen, da ihnen ein richtiges Bauteil angeliefert wird. Eine weitere Alternative betrifft eine Warenkorbbildung. Dabei werden alle bei der Montage bzw. einem entsprechenden Prozess nacheinander zu verbauenden Bauteile in einem Warenkorb bereitgestellt, der mit der zu montierenden Vorrichtung mitgeführt wird. Hierbei werden bestimmte Bauteile, die bspw. für einen jeweiligen Motor quantitativ erforderlich sind, in einem Behälter gesammelt, der auch als Warenkorb bezeichnet wird. Dieser Behälter trifft an einer Produktionslinie mit dem zugehörigen Motor zusammen, wobei Bauteile aus diesem Behälter verbaut werden.

Derartige Prozesse sind für eine Fließbandfertigung geeignet. Bei einer modularen Montage, bei der Montagestationen je nach Varianz und einer Verbaunotwendigkeit angefahren werden, versagen diese Prinzipien, sobald sich Alternativen in einem Montageplan ergeben, was dazu führen kann, dass Zeit und Ort eines jeweiligen Montageprozesses nicht mehr eindeutig vorhersagbar sind.

Ein Motor wird aus verschiedenen Komponenten bzw. Bauteilen montiert. Dabei ergibt sich aus dessen Konstruktion heraus eine bestimmte Montagereihenfolge, die auf einem herkömmlichen Fließband (Verkettung) sehr gut umgesetzt werden kann. Eine Alternative zu einem solchen Fließband ist die Nutzung eines fahrerlosen Transportsystems (FTS) zum Transport von einer Montagestation einer Montageanlage zur nächsten. Dies wird als "modulare Montage" bezeichnet, bei der einzelne Montagestationen als Module betrachtet werden. Die Montagereihenfolge für eine bestimmte Variante eines Motors beschreibt, welche Montagestationen der Montageanlage in welcher Reihenfolge angefahren werden können. Je nach Variante könne dabei auch Montagestationen ausgelassen werden, die für eine jeweilige Variante nicht benötigt werden. Bei einem Verbau oder Nichtverbau eines Turboladers bei einem Grundmotor können Montagestationen in einer anderen Reihenfolge angefahren werden, sofern die Montagereihenfolge dies zulässt. Gegenüber einem getakteten Fließband verbleibt der Motor nur solange in einer Montagestation wie für die Bearbeitung nötig und fährt dann sofort in eine nächste mögliche Montagestation, wobei keine übergeordnete Taktzeit besteht. Dadurch kann eine Durchlaufzeit deutlich reduziert werden. Für eine Folge von automatischen Montagestationen ist das ein idealer Durchlauf.

Bei einem aus der Druckschrift DE 10 2006 031 592 A1 bekannten Verfahren zum Montieren von Bauteilen ist vorgesehen, dass an wenigstens einem menschlichen Arbeitsort mindestens drei Werkstückträger angeordnet sind, auf denen sich Bauteile befinden. Dabei werden die Bauteile während eines Arbeitstakts gleichzeitig bearbeitet. Nachfolgend werden die montierten Bauteile an mindestens einer Automatikstation gleichzeitig weiter bearbeitet.

Eine Fertigungsanlage zur Serienfertigung von Kraftfahrzeugen ist in der Druckschrift DE 10 2013 000 569 A1 beschrieben. Diese Fertigungsanlage umfasst mehrere Arbeitsstationen, an denen jeweils wenigstens ein vorbestimmter Arbeitsprozess ausführbar ist. Dabei sind einige der Arbeitsstationen als separate und unverkoppelte Arbeitsstationen ausgebildet, mit denen Arbeitsprozesse taktfrei ausgeführt werden können. Außerdem sind Förderfahrzeuge zum Transport eines herzustellenden Kraftfahrzeugs zwischen zwei Arbeitsstationen vorgesehen. Diese Förderfahrzeuge sind durch eine übergeordnete Steuervorrichtung zu steuern. Eine übergeordnete Steuervorrichtung ist dazu ausgebildet, jedes erste Förderfahrzeug nach einer vorab festgelegten individuellen Arbeitsfolge zur nächsten hierfür vorgesehenen Arbeitsstation zu leiten, welche für das darauf transportierte herzustellende Kraftfahrzeug vorgesehen ist. Bei längerer eingeschränkter Verfügbarkeit oder bei längerem Ausfall einer Arbeitsstation können die herzustellenden Kraftfahrzeuge in einem Puffer geparkt werden.

Vor diesem Hintergrund stellt sich die Aufgabe, eine Bereitstellung von Material zur Montage einer Vorrichtung zu optimieren.

Diese Aufgabe wird durch ein Verfahren und ein System mit den Merkmalen der unabhängigen Patentansprüche gelöst. Ausführungsformen des Verfahrens und des Systems gehen aus den abhängigen Patentansprüchen und der Beschreibung hervor.

Das erfindungsgemäße Verfahren ist zum Montieren einer Vorrichtung vorgesehen, wobei eine modulare Montageanlage, die mehrere Montagestationen aufweist, ein Materialversorgungssystem, das mehrere Warenkörbe umfasst, und ein Transportsystem, das mehrere Transportfahrzeuge umfasst, verwendet werden. Dabei wird mit jeweils einer Montagestation mindestens ein Montageschritt durchgeführt, wobei zu Beginn der Montage mindestens ein ursprüngliches Bauteil bereitgestellt wird, das einen ursprünglichen Montagezustand der zu montierenden Vorrichtung definiert, wobei für die zu montierende Vorrichtung gemäß einer Montagevorgabe bzw. einer Montagereihenfolge mehrere Montageschritte durchführbar bzw. durchzuführen sind, wobei jeweils ein Montageschritt mit einer Montagestation durchgeführt wird, wobei der Montagestation zum Durchführen des Montageschritts Material bereitgestellt wird. Hierbei wird ein aktueller Montagezustand der zu montierenden Vorrichtung kontinuierlich überwacht. Außerdem wird für die zu montierende Vorrichtung kontinuierlich eine Montagevorschau bereitgestellt, die Angaben zu mindestens einem für die zu montierende Vorrichtung noch durchzuführenden Montageschritt umfasst, wobei die Angaben Informationen darüber umfassen, zu welchem Bereitstellungszeitpunkt welches Material einer zur Durchführung des Montageschritts vorgesehenen Montagestation bspw. vorläufig bereitzustellen ist, wobei ausgehend von einem aktuellen Zeitpunkt ein Bereitstellungszeitraum bzw. eine Bereitstellungsdauer bis zum Erreichen des Bereitstellungszeitpunkts ermittelt wird. Weiterhin wird bspw. kontinuierlich ein Logistikbereitstellungszeitraum (LBZ) bzw. eine Logistikbereitstellungsdauer ermittelt, der Informationen über einen Kommissionierungszeitraum bzw. eine Kommissionierungsdauer zum Kommissionieren des Materials durch das Materialversorgungssystem und einen Transportzeitraum bzw. eine Transportdauer des Transports des Materials von dem Materialversorgungssystem zu mindestens einer für die Montage bspw. vorläufig vorgesehenen Montagestation durch ein Transportfahrzeug umfasst. Eine Kommissionierung eines jeweiligen Warenkorbs im Materialversorgungssystem wird für den Fall initiiert, falls eine zeitliche Differenz aus dem Bereitstellungszeitraum und dem Logistikbereitstellungszeitraum bzw. eine zeitliche Differenz aus der Bereitstellungsdauer und der Logistikbereitstellungsdauer einen vorgebbaren ersten Schwellwert unterschreitet. Dabei wird die Montagevorgabe im Laufe des Verfahrens präzisiert und geändert, wobei das Materialversorgungssystem aus der sich verändernden Montagevorgabe lernt und auf mögliche zu erwartende Veränderungen der Montagevorgabe rechtzeitig reagiert. Eine Steuereinheit zur Steuerung des Verfahrens weist ein neuronales Netz auf.

Von dem Materialversorgungssystem wird für einen jeweiligen Montageschritt benötigtes Material in einem Warenkorb kommissioniert, wobei von dem Materialversorgungssystem ein Transport des Materials zu einer zur Durchführung des jeweiligen Montageschritts vorgesehenen Montagestation mit einem Transportfahrzeug veranlasst wird, wobei Material in dem Warenkorb mit dem Transportfahrzeug von dem Materialversorgungssystem zu einer Montagestation, mit der der jeweilige Montageschritt durchzuführen ist, automatisch transportiert wird.

In Ausgestaltung wird bzw. ist ein Freiheitsgrad bei einer Reihenfolge von durchzuführenden Montageschritten gegeben. Dabei ist es möglich, dass wenigstens ein Montageschritt alternativ bzw. wahlweise von mehreren Montagestationen durchgeführt werden kann, wobei eine dieser möglichen Montagestationen, mit der der Montageschritt durchführbar ist, ausgewählt wird, zu der das Material transportiert wird.

Außerdem ist es möglich, dass eine Reihenfolge der Montageschritte und somit eine Struktur der Montagevorgabe verfahrensbegleitend variiert werden.

In der Regel wird einer Montagestation zur Durchführung eines Montageschritts als Material mindestens ein weiteres Bauteil bereitgestellt, wobei das mindestens eine ursprüngliche Bauteil durch das mindestens eine weitere Bauteil ergänzt wird, wobei sich der Montagezustand der Vorrichtung nach einem jeweils abgeschlossenen Montageschritt ändert.

In weiterer Ausgestaltung ist vorgesehen, dass für den Fall, dass eine zeitliche Differenz aus der Bereitstellungsdauer bis zum Erreichen des jeweiligen Bereitstellungszeitpunkts und der Transportdauer für den Transport des Materials einen vorgebbaren zweiten Schwellwert unterschreitet, die zum Durchführen des Montageschritts vorgesehene Montagestation endgültig ausgewählt und der Transport des Materials zu dieser Montagestation initiiert wird.

In der Regel wird ausgehend von dem ursprünglichen Montagezustand der Vorrichtung ermittelt, welcher mindestens eine Montageschritt für die Vorrichtung bereits abgeschlossen ist, wobei der aktuelle Montagezustand der Vorrichtung anhand des mindestens einen abgeschlossenen Montagezustands ermittelt wird.

Außerdem ist vorgesehen, dass die sich in der Montage befindliche Vorrichtung nach Abschluss eines Montageschritts in einer Montagestation zur Durchführung eines weiteren Montageschritts zu einer weiteren Montagestation transportiert wird.

Bei Durchführung des Verfahrens wird der Montagezustand des sich in der Montage befindlichen Objekts bzw. der sich in der Montage befindlichen Vorrichtung überwacht. Auf Grundlage des jeweils aktuellen Montagezustands des Objekts zu dem aktuellen Zeitpunkt kann die aus den Montageschritten bestehende Montagevorgabe laufend angepasst und/oder aktualisiert werden. Der aktuelle Montagezustand des sich in der Montage befindlichen Objekts hängt von den bereits abgeschlossen Montageschritten ab. Demnach liegt zu dem aktuellen Zeitpunkt jeweils ein Ist-Montagezustand für das Objekt vor. Außerdem kann für das Objekt ein abschließender Montagezustand definiert werden, der auch als Soll-Montagezustand bezeichnet werden kann. Falls für das Objekt als aktueller Montagezustand dieser Soll-Montagezustand vorliegt, bedeutet dies, dass die Montage des Objekts komplett abgeschlossen ist. Zum Erreichen des endgültigen Montagezustands ausgehend von dem ursprünglichen Montagezustand sind bestimmte Montageschritte an bestimmten Montagestationen durchzuführen. Die im Rahmen des Verfahrens zu berücksichtigende Montagevorgabe, die die durchzuführenden bzw. durchführbaren Montageschritte umfasst, wird ausgehend von dem aktuellen Montagezustand des Objekts ebenfalls angepasst und/oder aktualisiert. Dabei ist es möglich, dass die ausgehend von dem aktuellen Montagezustand bis zum Erreichen des Soll-Montagezustands vorgesehene Montagevorgabe variiert werden kann, was bedeutet, dass bspw. eine Reihenfolge von noch durchzuführenden Montageschritten innerhalb der Montagevorgabe verändert wird. Weiterhin ist es möglich, dass zwei Montageschritte ggf. zeitgleich an derselben Montagestation aber auch voneinander unabhängig an unabhängigen Montagestationen durchgeführt werden können.

Durch die Montagevorgabe wird durch eine evtl. variable Reihenfolge der Montageschritte auch vorgegeben, an welcher Montagestation das Objekt zu montieren und/oder zu bearbeiten ist. Aufgrund dessen ergibt sich auch, wie das Objekt nach einem abgeschlossen Montageschritt an einer Montagestation zu einer nächsten Montagestation zu transportieren ist, mit der für das Objekt ein weiterer Montageschritt durchgeführt werden kann. Ein Zeitpunkt, zu dem das zu montierende Objekt eine nächste Montagestation erreicht haben wird, kann auch als Bereitstellungszeitpunkt definiert werden. Der Zeitpunkt bis zum Eintreten bzw. Erreichen des Bereitstellungszeitpunkts wird ausgehend von dem jeweils aktuellen Zeitpunkt berechnet. Dabei ist der vorzusehende Logistikbereitstellungszeitraum bzw. die Logistikbereitstellungsdauer kürzer als der Bereitstellungszeitraum bzw. die Bereitstellungsdauer zwischen dem aktuellen Zeitpunkt und dem Bereitstellungszeitpunkt. Die Kommissionierung des Materials wird dann initiiert, wenn die zeitliche Differenz aus dem Bereitstellungszeitraum zwischen dem aktuellen Zeitpunkt und dem Bereitstellungszeitpunkt sowie dem Logistikbereitstellungszeitraum den vorgegebenen ersten Schwellwert unterschreitet. Sobald die Kommissionierung initiiert wurde und das Material ggf. schon zu der Montageanlage transportiert wird, kann die zum Durchführen des Montageschritts vorgesehene Montagestation endgültig ausgewählt werden. Dies ist dann der Fall, wenn die zeitliche Differenz zwischen dem Bereitstellungszeitraum und dem für den Transport vorgesehenen Transportzeitraum den zweiten Schwellwert unterschreitet. Das erfindungsgemäße System zur Durchführung des Verfahrens ist zum Montieren einer Vorrichtung ausgebildet und umfasst eine Steuereinheit, die ein neuronales Netz aufweist, eine modulare Montageanlage mit mehreren Montagestationen, ein Materialversorgungssystem mit mehreren Warenkörben und ein Transportsystem mit mehreren Transportfahrzeugen. Dabei ist jeweils eine Montagestation dazu ausgebildet, mindestens einen Montageschritt durchzuführen. Zu Beginn der Montage wird mindestens ein ursprüngliches Bauteil bereitgestellt, das einen ursprünglichen Montagezustand der zu montierenden Vorrichtung definiert, wobei für die zu montierende Vorrichtung gemäß einer Montagevorgabe mehrere Montageschritte durchzuführen sind. Eine Montagestation ist dazu ausgebildet, jeweils einen Montageschritt durchzuführen, wobei der Montagestation zum Durchführen des Montageschritts Material bereitgestellt wird. Hierbei wird ein aktueller Montagezustand einer jeweils zu montierenden Vorrichtung in der Regel kontinuierlich überwacht. Außerdem wird für die zu montierende Vorrichtung kontinuierlich eine Montagevorschau bereitgestellt, die Angaben zu mindestens einem für die zu montierende Vorrichtung noch durchzuführenden Montageschritt umfasst, wobei die Angaben Informationen darüber umfassen, zu welchem Bereitstellungszeitpunkt welches Material einer zur Durchführung des Montageschritts vorgesehenen Montagestation bspw. vorläufig bereitzustellen ist. Außerdem wird bspw. kontinuierlich ein Logistikbereitstellungszeitraum ermittelt, der Informationen über einen Kommissionierungszeitraum bzw. eine Kommissionierungsdauer einer Kommissionierung des Materials durch das Materialversorgungssystem und einen Transportzeitraum bzw. eine Transportdauer zum Transportieren des Materials von dem Materialversorgungssystem zu mindestens einer für die Montage bspw. vorläufig vorgesehenen Montagestation durch ein Transportfahrzeug umfasst. Eine Kommissionierung eines jeweiligen Warenkorbs wird im Materialversorgungssystem für den Fall initiiert, dass eine zeitliche Differenz aus einem Bereitstellungszeitraum bzw. einer Bereitstellungsdauer, der bzw. die sich von einem aktuellen Zeitpunkt bis zu dem Bereitstellungszeitpunkt erstreckt, und dem Logistikbereitstellungszeitraum einen vorgebbaren ersten Schwellwert unterschreitet. Dabei lernt das Materialversorgungssystem aus der sich verändernden Montagevorgabe und reagiert auf mögliche zu erwartende Veränderungen der Montagevorgabe rechtzeitig.

Eine Steuereinheit des Systems ist dazu ausgebildet, für eine zu montierende Vorrichtung bereits durchgeführte bzw. abgeschlossene Montageschritte zu registrieren und/oder zu erfassen und einen aktuellen Montagezustand zu dieser Vorrichtung ausgehend von dem ursprünglichen Montagezustand und den bereits abgeschlossenen Montageschritten zu bestimmen. Außerdem ist die Steuereinheit dazu ausgebildet, anhand der Montagevorgabe zu ermitteln, welche Montageschritte für die Vorrichtung noch durchgeführt werden müssen. Das System weist auch eine Uhr auf, die der Steuereinheit zugeordnet ist und mit der die Zeit erfasst und somit ein jeweils aktueller Zeitpunkt bestimmt wird. Somit kann ein Bereitstellungszeitraum bis zu einem laut Montagevorgabe vorgesehenen Bereitstellungszeitpunkt ermittelt werden.

Mit dem Verfahren und dem System ist es u. a. möglich, bei einer Montage Material, in der Regel Bauteile, mindestens einer Montagestation einer Montageanlage zeit- und ortsnah, "just in moment" bzw. JIM, bereitzustellen, wobei "moment" für einen Moment und/oder eine Situation steht.

In einer modularen Montage wird das zu montierende Objekt bzw. die zu montierende Vorrichtung oder ein zu montierendes Produkt mit einem fahrerlosen Transportfahrzeug eines Transportsystems durch einen Montage bzw. Fertigungsprozess transportiert, bspw. gefahren. Dies ermöglicht eine dynamische Nutzung jener Montagestationen, die für das zu montierende Produkt bzw. für eine zu montierende Einheit benötigt werden. Ist ein von einer Montagestation durchzuführender Montageschritt abgeschlossen, wird die nächstnotwendige Montagestation zur Durchführung des nächsten Montageschritts angefahren. Eine Auswahl dieser nächstnotwendigen Montagestation ist dabei von mehreren Faktoren abhängig. Einerseits ist die Auswahl durch die Montagevergabe bzw. Montagereihenfolge des zu verbauenden Materials, bspw. von zu verbauenden Bauteilen, aus denen die Vorrichtung bzw. das Produkt zu bilden ist, vorgegeben. Falls die Montagevorgabe Alternativen zulässt, ist es möglich, dass die nächstnotwendige Montagestation nicht mehr streng vorgegeben ist. Sind mehrere Alternativen möglich, so wird z. B. eine nächstfreie Montagestation angefahren. Mit dieser können andere Montageschritte bzw. Arbeitsinhalte durchgeführt werden, mit der auch anderes Material verarbeitet und/oder montiert werden kann. Allerdings ist es im Rahmen des Verfahrens auch möglich, die Bauteile bzw. Material auch der nächstfreien Montagestation bereitzustellen.

Die Bereitstellung von Bauteilen bzw. Material benötigt einen gewissen Vorlauf, der als Logistikbereitstellungszeitraum (LBZ) bezeichnet werden kann. Dieser Logistikbereitstellungszeitraum umfasst den Kommissionierungszeitraum und somit die Kommissionierungsdauer zum Kommissionieren von Material, d. h. in Ausgestaltung mindestens eines Bauteils, und den Transportzeitraum und somit die Transportdauer zum Zurücklegen eines Fahrwegs eines Transportfahrzeugs des fahrerlosen Transportsystems (FTS) mit diesem Bauteil zu der Montagestation bzw. einem Verbauplatz. Für den eigentlichen Transport des Materials, bspw. Bauteils, sind neben dem fahrerlosen Transportsystem auch andere Transportfahrzeuge und/oder Transportmittel denkbar. Falls sich ein Transportfahrzeug mit bereits benötigtem Material in der Montageanlage befindet, entfällt der Kommissionierungszeitraum, da die Kommissionierung bereits im Vorfeld erledigt war. Außerdem wird der Fahrweg kürzer.

Weiterhin ist es möglich, dass zu einem jeweils aktuellen Zeitpunkt von der zu montierenden Vorrichtung bzw. dem zu montierenden Objekt, bspw. Gerät, in jedem jeweils aktuellen Montagezustand eine Montagevorgabe an das Materialversorgungssystem, bspw. an eine Materialversorgungseinrichtung, gesendet wird. Diese Montagevorgabe kann auch als Abrufvorschau bezeichnet werden und/oder ausgebildet sein und enthält neben den Montageschritten zumindest eine Liste von zu verarbeitendem Material, in der Regel von zu verarbeitenden Bauteilen, und einen Zeit- und Ortseintrag, wobei der Zeiteintrag aussagt, zu welchem Zeitpunkt bzw. Bereitstellungszeitpunkt das Material benötigt wird. Der Ortseintrag sagt aus, an welcher Montagestation bzw. an welchem Montageort das Material benötigt wird. Es handelt sich aber immer um eine Abrufvorschau, die im Laufe des Verfahrens präzisiert und/oder geändert wird. Dabei kann der Ortseintrag zunächst leer sein oder einen default-Wert für eine bspw. von dem Materialversorgungssystem am weitesten entfernte Montagestation enthalten. Erst kurz vor einem Verbau des Materials wird möglicherweise bekannt, an welcher Montagestation es verbaut wird, die von dem Transportfahrzeug mit dem Material dann zeitnah und ortsnah angefahren wird.

Die Montagevorgabe bzw. Abrufvorschau kann bei einer Ausgestaltung des Verfahrens verändert werden. Wird bspw. zu einem Zeitpunkt t an das Materialversorgungssystem eine Montagevorgabe M1-M2-M3-M4-M5 gesendet, wobei Montageschritte M1, M2, M3, M4, M5 für zu verarbeitendes Material oder für zu verarbeitende Bauteile u. a. Informationen darüber umfassen, zu welchem Zeitpunkt, in der Regel dem Bereitstellungszeitpunkt, und an welchem Ort und somit an welcher Montagestation das Material mit welchem Montageschritt M1, M2, M3, M4, M5 zu montieren bzw. zu verbauen ist, so kann diese Montagevorgabe zu einem nachfolgenden Zeitpunkt t+1 bspw. in M1-M2-M3-M5-M5, geändert werden, wobei ein Montageschritt M5 früher und/oder doppelt durchzuführen und dabei zu montierendes Material bspw. früher und doppelt bereitzustellen ist. Weiterhin kann sich eine Ortsangabe und somit eine Montagestation bei der Montagevorgabe zum Zeitpunkt t+1 geändert haben. Das Materialversorgungssystem reagiert auf diese veränderte Montagevorgabe und entscheidet, ob eine Montagestation in einer zur Verfügung stehenden Zeit noch bedient werden kann. Ist dies nicht der Fall, kann bzw. können sich das System zur Durchführung der Montage und/oder das Materialversorgungssystem selbst optimieren. Hierbei kann eine Wartezeit entstehen. Es kann aber auch möglich sein, dass eine rechtzeitige Bereitstellung des Materials zur Realisierung des Montageschritts M5 an der angegebenen Montagestation nicht rechtzeitig möglich ist, wobei die Realisierung des Montageschritts M5 an einer anderen auch freien Montagestation unter Umsetzung desselben Montageschritts mit gleichem Inhalt möglich ist, wobei der Fahrweg zum Transport des zu montierenden Bauteils verändert wird. Alternativ kann bei der Montage vorhergesehen werden, ob eine sich ändernde Montagevorgabe von dem Materialversorgungssystem zur Bereitstellung des Materials realisiert werden kann.

Die üblicherweise zeitliche Differenz zwischen dem Logistikbereitstellungszeitraum und dem noch zur Verfügung stehenden Bereitstellungszeitraum ist ebenfalls als ein Zeitraum bzw. eine Dauer und/oder eine Zeitspanne ausgebildet. Ist diese zeitliche Differenz zwischen dem Logistikbereitstellungszeitraum und dem noch zur Verfügung stehenden Bereitstellungszeitraum, bis zum Erreichen des Bereitstellungszeitpunkts, kleiner als der erste Schwellwert, so wird mit der Kommissionierung begonnen, was selbst dann möglich ist, wenn die anzufahrende Montagestation nach der Kommissionierung noch nicht feststeht. In diesem Fall wird das Transportfahrzeug dennoch mit dem Material, bspw. dem Bauteil, losgeschickt. Sobald verfahrensbegleitend darüber entschieden wird, an welcher Montagestation das Material montiert und/oder verbaut wird, wird das Transportfahrzeug mit dem Material zu der vorgesehenen Montagestation transportiert.

Ergibt sich bei einer Veränderung der Montagevorgabe, dass das losgeschickte Material gar nicht mehr benötigt wird, so verbleibt es noch einen gewissen Zeitraum im Transportfahrzeug und somit im System, um möglicherweise eine andere Montagevorgabe mit mindestens einem Montageschritt bedienen zu können, sofern genügend Transportfahrzeuge zur Verfügung stehen, um andere Montagevorgaben zu bedienen. Anderenfalls wird das Material wieder in dem Materialversorgungssystem eingelagert.

Verändert sich die Montagevorgabe nicht oder wird sie hinsichtlich einer Zeit- und Ortsangabe präzisiert, so wird das Transportfahrzeug mit dem Material zum richtigen Zeitpunkt zur richtigen Montagestation transportiert.

Das Materialversorgungssystem kann in einer Ausgestaltung des Systems auch aus den sich verändernden Montagevorgaben lernen und auf mögliche zu erwartende Veränderungen der Montagevorgaben auch rechtzeitig reagieren. Wenn sich bspw. die Montagevorgabe M1-M2-M3-M4-M5 immer wieder in M1-M2-M3-M5-M5 ändert, so kann Material bzw. können Bauteile für beide Montagevorgaben oder auch nur für die schlussendliche Montagevorgabe bereitgestellt werden. Alternativ dazu kann auch innerhalb der Montageanlage ein Materialversorgungssystem angelegt werden, das von dem Transportfahrzeug angefahren wird. In diesem Fall wird auf dem Transportfahrzeug ein Warenkorb angeordnet.

Weiterhin kann auch das Materialversorgungssystem ein Produktionsprogramm erfassen und/oder analysieren und daraus eine Vorschau für einen Warenkorb ableiten, um damit Transportfahrzeuge mit Material in die Montageanlage zu schicken, die voraussichtlich benötigt werden.

Das System ist in der Lage, Bauteile und somit Material den Montagestationen als Montageorte der Montageanlage dynamisch und zeitnah bereitzustellen und unterstützt damit den Prozess einer modularen Montage. Durch Vorsehen der zeit- und ortsnahen Versorgung mit Material und somit mit Bauteilen besteht für das Materialversorgungssystem die Möglichkeit, Bestellungen von Material und Montageschritte zu deren Verarbeitung zeitlich auszugleichen und bspw. bestelltes und bereits eingetroffenes Material priorisiert an Montagestationen zu verteilen. Dadurch können Ressourcen der Montageanlage möglichst optimal ausgenutzt werden.

Das System ist zur modularen Fertigung und/oder Montage des Objekts bzw. der Vorrichtung aus verschiedenem Material, bspw. aus verschiedenen Bauteilen, vorgesehen, wobei es u. a. auch möglich ist, mindestens zwei derartige Bauteile bei Durchführung eines Montageschritts miteinander zu verbinden und/oder aneinander zu befestigen. Hierbei können Montagestationen mehrfach genutzt werden. Eine aus Bauteilen zu fertigende bzw. herzustellende Vorrichtung kann als Motor, bspw. Verbrennungsmotor oder Elektromotor, zum Antreiben bzw. Fortbewegen eines Kraftfahrzeugs ausgebildet sein, wobei ein derartiger Motor modular montiert werden kann.

Die Montageanlage ist dafür vorgesehen, in den Montagestationen jeweilige Montageschritte mit jeweiligen Montageumfängen abzuarbeiten. Dabei können unterschiedliche Montageschritte in unterschiedlichen Montagestationen abgearbeitet und zu montierende Objekte hierfür in eine jeweils dafür vorgesehene Montagestation gebracht werden. Eine Reihenfolge der Montageschritte und somit eine Struktur der Montagevorgabe werden verfahrensbegleitend variiert.

Ein Freiheitsgrad bei der Reihenfolge abzuarbeitender Arbeitspakete ist in der Regel vorgegeben. Allerdings ist auch eine alternative Abarbeitung wenigstens eines Montageschritts in einer von wenigstens zwei auswählbaren Montagestationen möglich.

Weitere Vorteile und Ausgestaltungen der Erfindung ergeben sich aus der Beschreibung und den beiliegenden Zeichnungen.

Die Erfindung ist anhand von Ausführungsformen in den Zeichnungen schematisch dargestellt und wird unter Bezugnahme auf die Zeichnungen schematisch und ausführlich beschrieben.

Figur 1 zeigt in schematischer Darstellung eine Ausführungsform eines erfindungsgemäßen Systems bei Durchführung einer Ausführungsform des erfindungsgemäßen Verfahrens.

Figur 2 zeigt in schematischer Darstellung eine Montagevorgabe, die bei Durchführung der Ausführungsform des erfindungsgemäßen Verfahrens berücksichtigt wird.

Die Figuren werden zusammenhängend und übergreifend beschrieben, gleichen Komponenten sind dieselben Bezugsziffern zugeordnet.

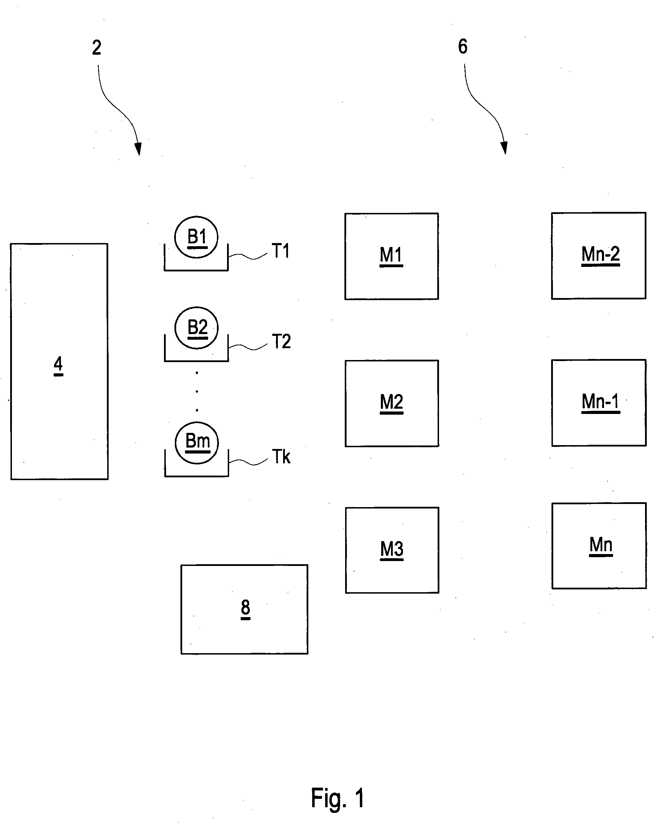

Mit der in Figur 1 schematisch dargestellten Ausführungsform des Systems 2 zur Durchführung der Ausführungsform des Verfahrens kann u. a. eine modulare Montage eines als Vorrichtung ausgebildeten Objekts durchgeführt werden. Das System 2 umfasst ein Materialversorgungssystem 4 zum Bereitstellen von m Bauteilen B1, B2,..., Bm als Material, von denen hier drei exemplarisch dargestellt sind, und eine Montageanlage 6 mit mehreren, insgesamt n Montagestationen M1, M2, M3,..., Mn-2, Mn-1, Mn, von denen hier sechs exemplarisch dargestellt sind. Bei Durchführung des Verfahrens werden die Bauteile B1, B2,..., Bm ausgehend von dem Materialversorgungssystem 4 mit Transportfahrzeugen T1, T2,..., Tk eines Transportsystems zu entsprechenden Montagestationen M1, M2, M3,..., Mn-2, Mn-1, Mn zeit- und ortsnah transportiert. Zur Steuerung der Ausführungsform des Systems 2 sowie des Verfahrens wird eine Steuereinheit 8 des Systems 2 verwendet.

Bei der Montage werden Montageschritte und/oder Arbeitsinhalte von Montagestationen M1, M2, M3,..., Mn-2, Mn-1, Mn als Module der Montageanlage 6 durchgeführt. Alternativ oder ergänzend ist es möglich, die Montagestationen M1, M2, M3,..., Mn-2, Mn-1, Mn auf einzelne Tätigkeiten und somit Montageschritte zu spezialisieren, die unabhängig von einem herzustellenden Objekt bzw. einer herzustellenden Vorrichtung und dessen bzw. deren Montagezustand sind. Eine Montagestation M1, M2, M3,..., Mn-2, Mn-1, Mn kann bspw. als einfacher Handarbeitsplatz, Schraubarbeitsplatz mit mindestens einem EC- bzw. Elektroschrauber, als Presse für ein Einpressen von Lagern als Bauteile, als Dichtmittelauftragsstation, als Messstation usw. ausgebildet sein. Eine jeweilige Montagestation M1, M2, M3,..., Mn-2, Mn-1, Mn kann bei Durchführung eines Montageschritts für mindestens eine Vorrichtung einen bestimmten Arbeitsumfang leisten, wobei bekannt ist, wieviel Zeit für diesen Montageschritt benötigt wird.

Üblicherweise ist die Vorrichtung aus mehreren Bauteilen B1, B2,..., Bm zu montieren, wobei unterschiedliche Montageschritte durchzuführen sind. Dabei ist es bspw. möglich, dass zu Beginn der Montage mindestens ein erstes Bauteil, in der Regel mehrere Bauteile bereitgestellt wird bzw. werden, das bzw. die einen Rohling der Vorrichtung bilden, wobei die Vorrichtung zu Beginn einen ursprünglichen Montagezustand aufweist. Die Vorrichtung wird bei Durchführung weiterer Montageschritte durch weitere Bauteile ergänzt, wobei sich ein Montagezustand der Vorrichtung während der jeweiligen Durchführung der Montageschritte ändert. Dabei weist die Vorrichtung zu einem jeweils aktuellen Zeitpunkt einen aktuellen Montagezustand bzw. Ist-Montagezustand auf.

Für einen Motor als zu montierende Vorrichtung oder auch eine beliebige Variante eines Motors als herzustellende und/oder zu montierende Vorrichtung, der mit den Montagestationen unter Durchführung der Montageschritte aufgebaut werden kann, wird eine Montagevorgabe, die als Vorranggraph ausgebildet sein kann, erstellt. Die Montagevorgabe umfasst eine Reihenfolge an Montageschritten zur Montage bzw. zum Aufbau der Vorrichtung. Die fertig montierte Vorrichtung soll einen endgültigen Montagezustand bzw. Soll-Montagezustand aufweisen, der sich ergibt, wenn bestimmte Montageschritte abgeschlossen sind. Dabei ist es auch möglich, dass für die Reihenfolge an Montageschritten auch Varianten bzw. Alternativen möglich sind. Falls während der Montage der Vorrichtung, wenn erst ein Teil der insgesamt vorgesehenen Montageschritte durchgeführt worden ist, eine gemäß der Montagevorgabe zunächst vorgesehene Montagestation Mi besetzt sein sollte, kann die noch in der Montage befindliche Vorrichtung zu einer anderen, freien Montagestation Mj transportiert werden, wobei ein alternativer Montageschritt zuerst ausgeführt wird, wobei i, j ∈ [1,n].

Die als Vorranggraph ausgebildete Montagevorgabe beschreibt die Reihenfolge an durchzuführenden Montageschritten. Dabei umfasst die Montagevorgabe Informationen darüber, welche einzelnen Montagestationen nacheinander von der zu montierenden bzw. in der Montage befindlichen Vorrichtung angefahren werden müssen und welche Bauteile zur Montage benötigt werden und an jeweilige Montagestationen diese zu transportieren sind.

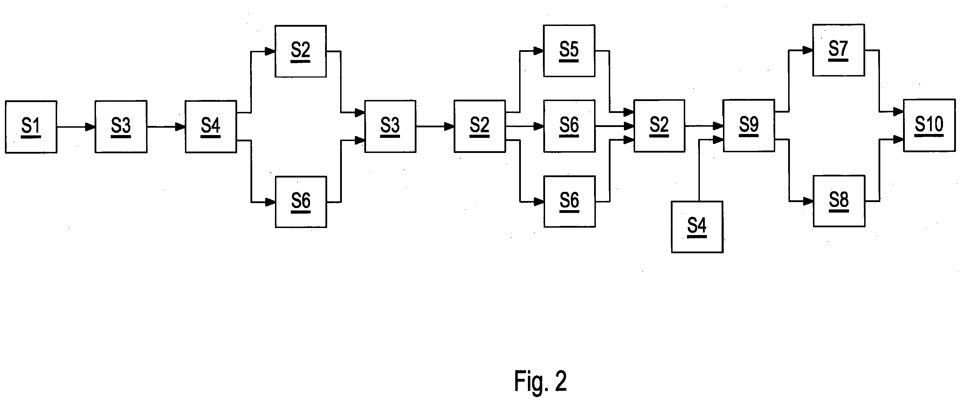

Bei der Montage der Vorrichtung sind hier bspw. zehn Montageschritte S1, S2, S3, S4, S5, S6, S7, S8, S9, S10 vorgesehen, die die in Figur 2 als Diagramm bzw. Vorranggraph dargestellte erste Montagevorgabe bilden. Dabei ist jeweils ein Montageschritt S1, S2, S3, S4, S5, S6, S7, S8, S9, S10 mit einer Montagestation M1, M2, M3,..., Mn-2, Mn-1, Mn durchzuführen, wobei dieser Montagestation M1, M2, M3,..., Mn-2, Mn-1, Mn zur Durchführung eines jeweiligen Montageschritts S1, S2, S3, S4, S5, S6, S7, S8, S9, S10 als zu verarbeitendes Material ein Bauteil B1, B2,..., Bm bereitgestellt wird. Dabei kann für eine als Motor ausgebildete Vorrichtung die Montagevorgabe den in Figur 2 explizit gezeigten ersten Vorranggraph für die Montageschritte S1, S2, S3, S4, S5, S6, S7, S8, S9, S10 aufweisen. Dieser Vorranggraph umfasst unterschiedliche alternative Varianten zum Montieren der Vorrichtung, wie durch die jeweiligen Verzweigungen bzw. Gabelungen der Pfeile, die die Montageschritte koppeln, angedeutet. Die Varianten des Vorranggraphs können erweitert werden, wobei alternative Verzweigungen, die ein Vorranggraph zulassen könnte, berücksichtigt werden.

Bei jeweils einer Variante können einige Montageschritte, z. B. S2, S3, S4 oder S6, mehrmals durchgeführt werden, wobei für einen jeweiligen eine Montagestation M1, M2, M3,..., Mn-2, Mn-1, Mn verwendet wird, der zur Durchführung des jeweiligen Montageschritts S1, S2, S3, S4, S5, S6, S7, S8, S9, S10 mindestens ein Bauteil B1, B2,..., Bm bereitgestellt wird.

Sofern die Montagevorgabe bzw. ein Fertigungsfluss in Form von einer Verkettung abgebildet wird, sind einige Montageschritte S1, S2, S3, S4, S5, S6, S7, S8, S9, S10 bis zu sechsmal, ggf. sogar noch häufiger durchführbar, wenn für die zweite Variante der Vorrichtung ein jeweiliger Montageschritt S1, S2, S3, S4, S5, S6, S7, S8, S9, S10 zu einem anderen Bereitstellungszeitpunkt durchgeführt wird.

Über eine Simulation kann ermittelt werden, welche Montageschritte S1, S2, S3, S4, S5, S6, S7, S8, S9, S10 benötigt werden und welche Montagestationen M1, M2, M3,..., Mn-2, Mn-1, Mn zu deren Umsetzung durch Transportfahrzeuge T1, T2,..., Tk anzufahren und mit Bauteilen B1, B2,..., Bm zu beliefern sind, um ohne Stau die Montage von mehreren Vorrichtungen, die als Motoren ausgebildet sind, zu gewährleisten. Auch kann über eine ebensolche Simulation ermittelt werden, welche zusätzlichen Montagestationen M1, M2, M3,..., Mn-2, Mn-1, Mn und Transportfahrzeuge T1, T2,..., Tk benötigt werden, wenn eine Stückzahl der zu fertigenden Vorrichtungen erhöht wird.

Die Steuereinheit 8 zur Steuerung des Fertigungsflusses bzw. eines Produktionsflusses orientiert sich zunächst an einem für eine jeweilige Montagevorgabe vorgegebenen Vorranggraph. Dabei sind für die zu montierende Vorrichtung ein Vorranggraph für die Montagevorgabe und ein aktueller Montagezustand bekannt. In Ausgestaltung liegen für die Vorrichtung der ursprüngliche Montagezustand und eine ursprüngliche Montagevorgabe vor. Außerdem wird von der Steuereinheit 8 erfasst, welche Montageschritte S1, S2, S3, S4, S5, S6, S7, S8, S9, S10 bereits durchgeführt worden sind, woraus ein aktueller Montagezustand der sich in der Montage befindlichen Vorrichtung ermittelt wird. Hierzu wird ermittelt, welche Montageschritte S1, S2, S3, S4, S5, S6, S7, S8, S9, S10 ausgehend von dem ursprünglichen Montagezustand bereits abgeschlossen sind, woraus sich der jeweils aktuelle Montagezustand ergibt. Aus dem aktuellen Montagezustand und noch durchzuführenden Montageschritten S1, S2, S3, S4, S5, S6, S7, S8, S9, S10 wird ermittelt, zur welcher mindestens einen Montagestation M1, M2, M3,..., Mn-2, Mn-1, Mn welches mindestens eine Bauteil B1, B2,..., Bm zu transportieren ist, um mindestens einen weiteren Montageschritt S1, S2, S3, S4, S5, S6, S7, S8, S9, S10 durchzuführen.

Dabei kann zu einer Montagestation M1, M2, M3,..., Mn-2, Mn-1, Mn ein Bauteil B1, B2,..., Bm transportiert werden, um einen weiteren Montageschritt S1, S2, S3, S4, S5, S6, S7, S8, S9, S10 durchzuführen. Falls mehrere alternative Montageschritte S1, S2, S3, S4, S5, S6, S7, S8, S9, S10 durchzuführen sind, werden an mehrere Montagestationen M1, M2, M3,..., Mn-2, Mn-1, Mn mehrere Bauteile B1, B2,..., Bm transportiert. Hierbei wird von mindestens einem Transportfahrzeug T1, T2,..., Tk das mindestens eine Bauteil von dem Materialversorgungssystem 4 zu der mindestens einen Montagestation M1, M2, M3,..., Mn-2, Mn-1, Mn transportiert, wobei die mindestens eine Montagestation M1, M2, M3,..., Mn-2, Mn-1, Mn von dem mindestens einen Transportfahrzeug T1, T2,..., Tk angefahren wird. Hierbei wird bei Durchführung der Ausführungsform des Verfahrens durch die Simulation und eine ausreichende Anzahl an Montagestationen M1, M2, M3,..., Mn-2, Mn-1, Mn ein Stau von Transportfahrzeugen T1, T2,..., Tk vermieden, so dass ein derartiger Stau auch nur bei Störungen entstehen kann. Dabei ist es auch möglich, dass die Montageanlage 6 mehrere identische und/oder zumindest gleichartig aufgebaute Montagestationen M1, M2, M3,..., Mn-2, Mn-1, Mn aufweist, mit denen dieselben Montageschritte S1, S2, S3, S4, S5, S6, S7, S8, S9, S10 durchgeführt werden können. Somit ist es möglich, dass für mehrere herzustellende Vorrichtungen, die zugleich denselben Montagezustand aufweisen, gleichzeitig an unterschiedlichen Montagestationen M1, M2, M3,..., Mn-2, Mn-1, Mn derselbe Montageschritt S1, S2, S3, S4, S5, S6, S7, S8, S9, S10 durchgeführt wird.

Falls für eine Montagevorgabe für die Montageschritte S1, S2, S3, S4, S5, S6, S7, S8, S9, S10 und somit für eine daraus resultierende Montagereihenfolge für die aus den Bauteilen B1, B2,..., Bm zu montierende Vorrichtung Alternativen vorgesehen sind, berechnet die Steuereinheit 8, welche alternative Montagvorgabe für mindestens einen weiteren Montageschritt S1, S2, S3, S4, S5, S6, S7, S8, S9, S10, also bspw. für einen übernächsten oder noch weiteren Montageschritt S1, S2, S3, S4, S5, S6, S7, S8, S9, S10 ausgehend von dem aktuellen Montagezustand des Bauteils zu wählen ist, wobei Kollisionen von Transportfahrzeugen T1, T2,..., Tk, die zugleich für unterschiedliche zu montierende Vorrichtungen Bauteile B1, B2,..., Bm zu unterschiedlichen Montagestationen M1, M2, M3,..., Mn-2, Mn-1, Mn transportieren, vermieden werden. Zur Durchführung des Verfahrens weist die Steuereinheit 8 ein neuronales Netz sowie ausreichend Computerintelligenz auf, wobei eine jeweilige Montagevorgabe im Hintergrund laufend optimiert und angepasst wird.

Bei Durchführung des Verfahrens kann eine Anzahl an Montagestationen M1, M2, M3,..., Mn-2, Mn-1, Mn reduziert werden. Außerdem ist es möglich, die Montagestationen M1, M2, M3,..., Mn-2, Mn-1, Mn sowie Mitarbeiter, die diese bedienen, besser auszulasten. Dabei kann ein Montageschritt S1, S2, S3, S4, S5, S6, S7, S8, S9, S10 durch eine Montagestation M1, M2, M3,..., Mn-2, Mn-1, Mn durchgeführt werden, die zumindest teilweise oder vollständig von dem Mitarbeiter in der Regel manuell bedient wird. Weiterhin kann eine Montagestation M1, M2, M3,..., Mn-2, Mn-1, Mn einen Montageschritte S1, S2, S3, S4, S5, S6, S7, S8, S9, S10, halbautomatisch, unter manueller Betätigung durch den Mitarbeiter oder vollautomatisch durchführen. Außerdem ist es möglich, dass eine Menge an montierten Vorrichtungen aber auch eine Vielfalt hinsichtlich unterschiedlicher Varianten der Vorrichtung erhöht werden können.

Falls es eine jeweilige Bearbeitungszeit zur Durchführung eines Montageschritts S1, S2, S3, S4, S5, S6, S7, S8, S9, S10 mit einer Montagestation M1, M2, M3,..., Mn-2, Mn-1, Mn erlaubt, werden bspw. einige Montageschritte S1, S2, S3, S4, S5, S6, S7, S8, S9, S10 jeweils nur einmal durchgeführt, wobei eine jeweilige Montagestation M1, M2, M3,..., Mn-2, Mn-1, Mn zur Durchführung des Montageschritts S1, S2, S3, S4, S5, S6, S7, S8, S9, S10 jeweils nur einmal installiert werden muss, wobei der Montagestation M1, M2, M3,..., Mn-2, Mn-1, Mn nur dann Bauteile B1, B2,..., Bm bereitgestellt werden, wenn der jeweilige Montageschritt S1, S2, S3, S4, S5, S6, S7, S8, S9, S10 durchgeführt wird. Außerdem können durch eine einzelne Montagestation M1, M2, M3,..., Mn-2, Mn-1, Mn unterschiedliche Montageschritte S1, S2, S3, S4, S5, S6, S7, S8, S9, S10 durchgeführt werden, wodurch sie mehrfach verwendet und deutlich besser ausgelastet werden können. Sind zum Bedienen der Montagestation M1, M2, M3,..., Mn-2, Mn-1, Mn Mitarbeiter erforderlich, so werden auch diese optimal ausgelastet. Dabei ist es denkbar, dass ein Mitarbeiter an verschiedenen Montagestation M1, M2, M3,..., Mn-2, Mn-1, Mn arbeitet und die bei dem Verfahren zu montierende Vorrichtung von Montagestation M1, M2, M3,..., Mn-2, Mn-1, Mn zu Montagestation M1, M2, M3,..., Mn-2, Mn-1, Mn begleitet, weshalb die Anzahl an benötigten Mitarbeitern reduziert werden kann. Weiterhin sind beliebig viele Varianten einer bspw. als Motor ausgebildeten Vorrichtung montierbar, für die mit den Montagestationen M1, M2, M3,..., Mn-2, Mn-1, Mn unterschiedliche Montageschritte S1, S2, S3, S4, S5, S6, S7, S8, S9, S10 durchgeführt werden. Bei Bedarf kann auch eine neue Montagestation M1, M2, M3,..., Mn-2, Mn-1, Mn in die Montageanlage 6 integriert werden. Dabei kann die Montageanlage 6 eine Mischung von Montagestationen M1, M2, M3,..., Mn-2, Mn-1, Mn, die als Handarbeitsplätze ausgebildet sind, halbautomatischen und automatischen Montagestationen M1, M2, M3,..., Mn-2, Mn-1, Mn aufweisen. Auf Bearbeitungszeiten einzelner Montagestationen M1, M2, M3,..., Mn-2, Mn-1, Mn ist in der Regel keine Rücksicht zu nehmen.

Bei einer Erhöhung einer Stückzahl von zu montierenden Vorrichtungen kann über eine Simulation ermittelt werden, welche Montagestationen M1, M2, M3,..., Mn-2, Mn-1, Mn und Transportfahrzeuge T1, T2,..., Tk zusätzlich benötigt werden. Diese können dann aufgebaut werden, ohne in das laufende Verfahren einzugreifen. Ebenso kann bei einer Reduzierung der Stückzahl eine Belegung der Montagestationen M1, M2, M3,..., Mn-2, Mn-1, Mn mit Mitarbeitern angepasst werden. Bei einer geringen Stückzahl ist das Vorhandensein jeweils einer der Montagestationen M1, M2, M3,..., Mn-2, Mn-1, Mn ausreichend, d. h. die Montageanlage 6 kann mit dem Erhöhen der Stückzahl bis auf eine Kammstückzahl sukzessive ausgebaut werden. Das Verfahren ist für beliebige Montagen oder Fertigungsprozesse zum Herstellen unterschiedlicher Vorrichtungen, bspw. unterschiedlicher Objekte. anwendbar. Falls das Verfahren z. B. für eine Fertigung eines Kraftfahrzeugs als Vorrichtung mit klassischen 200 bis 300 Takten angewendet werden soll, wobei einzelne Montagestationen M1, M2, M3,..., Mn-2, Mn-1, Mn zueinander größere Abstände aufweisen, kann das Verfahren segmentiert werden, wobei mehrere Montagevorgaben, die unterschiedliche Montageschritte S1, S2, S3, S4, S5, S6, S7, S8, S9, S10 umfassen, modularisiert nacheinander durchgeführt werden. Demnach ist das System 2 hochflexibel ausgestaltet.

Bei Durchführung der Ausführungsform des Verfahrens wird zu einem jeweils aktuellen Zeitpunkt der aktuelle Montagezustand als Ist-Montagezustand der in der Montage befindlichen Vorrichtung erfasst. Dabei ergibt sich der jeweils aktuelle Montagezustand ausgehend von dem ursprünglichen Montagezustand der Vorrichtung und der bereits vollständig abgeschlossenen Montageschritte S1, S2, S3, S4, S5, S6, S7, S8, S9, S10. Außerdem wird zu dem aktuellen Zeitpunkt ermittelt, welche weiteren Montageschritte S1, S2, S3, S4, S5, S6, S7, S8, S9, S10 ausgehend von dem aktuellen Montagezustand noch durchgeführt werden müssen, bis die Vorrichtung ihren endgültigen Montagezustand bzw. Soll-Montagezustand aufweist, wobei die Vorrichtung in diesem Fall komplett montiert ist. Ausgehend von dem jeweils aktuellen Zeitpunkt wird ermittelt, ob für die in der Montage befindliche Vorrichtung alle bislang vorgesehenen Montageschritte S1, S2, S3, S4, S5, S6, S7, S8, S9, S10 abgeschlossen sind oder ob sich die Vorrichtung augenblicklich noch in einer Montagestation M1, M2, M3,..., Mn-2, Mn-1, Mn befindet und im Rahmen eines aktuell durchgeführten Montageschritts S1, S2, S3, S4, S5, S6, S7, S8, S9, S10 montiert wird. Ausgehend von dem aktuellen Montagzustand und einem Ort, in der Regel einer Montagestation, an dem sich die Vorrichtung befindet, kann ermittelt werden, wann die Vorrichtung an einer nächsten Montagestation angeordnet sein kann, an der für die Vorrichtung der nächste Montageschritt S1, S2, S3, S4, S5, S6, S7, S8, S9, S10 durchzuführen ist. Darüber kann ausgehend von dem aktuellen Zeitpunkt ein Bereitstellungszeitpunkt ermittelt werden, zu dem Bauteile B1, B2,..., Bm zu der jeweiligen Montagestation M1, M2, M3,..., Mn-2, Mn-1, Mn transportiert sein müssen. Weiterhin wird zu dem aktuellen Zeitpunkt ein Logistikbereitstellungszeitraum ermittelt, der einen ersten Kommissionierungszeitraum für eine Kommissionierung des mindestens einen Bauteils und einen zweiten Transportzeitraum für den Transport des mindestens einen Bauteils von dem Materialversorgungssystem zu mindestens einer für die Montage vorläufig vorgesehenen Montagestationen M1, M2, M3,..., Mn-2, Mn-1, Mn umfasst. Die Kommissionierung und weiterhin der Transport werden initiiert, wenn eine zeitliche Differenz aus dem Bereitstellungszeitraum zwischen dem aktuellen Zeitpunkt und dem Bereitstellungszeitpunkt, und dem Logistikbereitstellungszeitraum einen vorgebbaren ersten Schwellwert unterschreitet.

## Patentansprüche

1. Verfahren zum Montieren einer Vorrichtung mit einer modularen Montageanlage (6), die mehrere Montagestationen (M1, M2, M3,..., Mn-2, Mn-1, Mn) aufweist, einem Materialversorgungssystem (4), das mehrere Warenkörbe umfasst, und einem Transportsystem, das mehrere Transportfahrzeuge (T1, T2,..., Tk) umfasst, wobei mit jeweils einer Montagestation (M1, M2, M3,..., Mn-2, Mn-1, Mn) mindestens ein Montageschritt durchgeführt wird, wobei zu Beginn der Montage mindestens ein ursprüngliches Bauteil bereitgestellt wird, das einen ursprünglichen Montagezustand der zu montierenden Vorrichtung definiert, wobei für die zu montierende Vorrichtung gemäß einer Montagevorgabe mehrere Montageschritte durchführbar sind, wobei jeweils ein Montageschritt mit einer Montagestation (M1, M2, M3,..., Mn-2, Mn-1, Mn) durchgeführt wird, wobei der Montagestation (M1, M2, M3,..., Mn-2, Mn-1, Mn) zum Durchführen des Montageschritts Material bereitgestellt wird,
- wobei ein aktueller Montagezustand der zu montierenden Vorrichtung überwacht wird,
- wobei für die zu montierende Vorrichtung eine Montagevorschau bereitgestellt wird, die Angaben zu mindestens einem für die zu montierende Vorrichtung noch durchzuführenden Montageschritt umfasst, wobei die Angaben Informationen darüber umfassen, zu welchem Bereitstellungszeitpunkt welches Material einer zur Durchführung des Montageschritts vorgesehenen Montagestation (M1, M2, M3,..., Mn-2, Mn-1, Mn) bereitzustellen ist, wobei ausgehend von einem aktuellen Zeitpunkt ein Bereitstellungszeitraum bis zum Erreichen des Bereitstellungszeitpunkts ermittelt wird,
- wobei ein Logistikbereitstellungszeitraum ermittelt wird, der einen Transportzeitraum für einen Transport des Materials von dem Materialversorgungssystem (4) zu mindestens einer für die Montage vorgesehenen Montagestation (M1, M2, M3,..., Mn-2, Mn-1, Mn) durch ein Transportfahrzeug (T1, T2,..., Tk) umfasst,
- wobei eine Kommissionierung eines jeweiligen Warenkorbs im Materialversorgungssystem (4) für den Fall initiiert wird, dass eine Differenz aus dem Bereitstellungszeitraum und dem Logistikbereitstellungszeitraum einen vorgebbaren ersten Schwellwert unterschreitet,
**dadurch gekennzeichnet,**
**dass** der Logistikbereitstellungszeitraum einen Kommissionierungszeitraum für eine Kommissionierung des Materials durch das Materialversorgungssystem (4) umfasst, wobei die Montagevorgabe im Laufe des Verfahrens präzisiert und geändert wird, wobei das Materialversorgungssystem (4) aus der sich verändernden Montagevorgabe lernt und auf mögliche zu erwartende Veränderungen der Montagevorgabe rechtzeitig reagiert, .wobei eine Steuereinheit (8) zur Steuerung des Verfahrens ein neuronales Netz aufweist.

2. Verfahren nach Anspruch 1, bei dem von dem Materialversorgungssystem (4) ein für einen jeweiligen Montageschritt (M1, M2, M3,..., Mn-2, Mn-1, Mn) benötigtes Material in einem Warenkorb kommissioniert wird, wobei von dem Materialversorgungssystem (4) ein Transport des Materials zu einer zur Durchführung des jeweiligen Montageschritts vorgesehenen Montagestation (M1, M2, M3,..., Mn-2, Mn-1, Mn) mit dem Transportfahrzeug (T1, T2,..., Tk) veranlasst wird, wobei Material in dem Warenkorb mit dem Transportfahrzeug (T1, T2,..., Tk) von dem Materialversorgungssystem (4) zu einer Montagestation (M1, M2, M3,..., Mn-2, Mn-1, Mn), mit der der jeweilige Montageschritt durchzuführen ist, automatisch transportiert wird.

3. Verfahren nach Anspruch 1 oder 2, bei dem ein Freiheitsgrad bei einer Reihenfolge von durchzuführenden Montageschritten gegeben ist, wobei wenigstens ein Montageschritt alternativ von mehreren Montagestationen (M1, M2, M3,..., Mn-2, Mn-1, Mn) durchführbar ist, wobei eine dieser möglichen Montagestationen (M1, M2, M3,..., Mn-2, Mn-1, Mn) ausgewählt wird, zu der das Material transportiert wird.

4. Verfahren nach einem der voranstehenden Ansprüche, bei dem eine Reihenfolge der Montageschritte und somit eine Struktur der Montagevorgabe verfahrensbegleitend variiert werden.

5. Verfahren nach einem der voranstehenden Ansprüche, bei dem einer Montagestation (M1, M2, M3,..., Mn-2, Mn-1, Mn) zur Durchführung eines Montageschritts als Material mindestens ein weiteres Bauteil (B1, B2,..., Bm) bereitgestellt wird, wobei das mindestens eine ursprüngliche Bauteil durch das mindestens eine weitere Bauteil (B1, B2,..., Bm) ergänzt wird.

6. Verfahren nach einem der voranstehenden Ansprüche, bei dem für den Fall, dass eine Differenz aus dem Bereitstellungszeitraum und dem Transportzeitraum für den Transport einen vorgebbaren zweiten Schwellwert unterschreitet, die zum Durchführen des Montageschritts vorgesehene Montagestation (M1, M2, M3,..., Mn-2, Mn-1, Mn) endgültig ausgewählt und der Transport des Materials zu dieser Montagestation (M1, M2, M3,..., Mn-2, Mn-1, Mn) initiiert wird.

7. Verfahren nach einem der voranstehenden Ansprüche, bei dem ausgehend von dem ursprünglichen Montagezustand der Vorrichtung ermittelt wird, welcher mindestens eine Montageschritt für die Vorrichtung abgeschlossen ist, wobei der aktuelle Montagezustand der Vorrichtung anhand des mindestens einen abgeschlossenen Montagezustands ermittelt wird.

8. Verfahren nach einem der voranstehenden Ansprüche, bei dem die sich in der Montage befindliche Vorrichtung nach Abschluss eines Montageschritts in einer Montagestation (M1, M2, M3,..., Mn-2, Mn-1, Mn) zur Durchführung eines weiteren Montageschritts zu einer weiteren Montagestation (M1, M2, M3,..., Mn-2, Mn-1, Mn) transportiert wird.

9. System eingerichtet zur Durchführung des Verfahrens nach einem der voranstehenden Ansprüche zum Montieren einer Vorrichtung, das eine modulare Montageanlage (6) mit mehreren Montagestationen (M1, M2, M3,..., Mn-2, Mn-1, Mn), ein Materialversorgungssystem (4) mit mehreren Warenkörben, ein Transportsystem mit mehreren Transportfahrzeugen (T1, T2,..., Tk) und eine Steuereinheit (8) zur Steuerung des Verfahrens nach einem der voranstehenden Ansprüche umfasst, wobei jeweils eine Montagestation (M1, M2, M3,..., Mn-2, Mn-1, Mn) dazu ausgebildet ist, mindestens einen Montageschritt durchzuführen, wobei für die zu montierende Vorrichtung gemäß einer Montagevorgabe mehrere Montageschritte durchführbar sind,
**dadurch gekennzeichnet,**
**dass** die Steuereinheit (8) zur Steuerung des Verfahrens ein neuronales Netz aufweist, wobei das Materialversorgungssystem (4) dazu eingerichtet ist, aus der sich verändernden Montagevorgabe zu lernen und auf mögliche zu erwartende Veränderungen der Montagevorgabe rechtzeitig zu reagieren.

10. System nach Anspruch 9, bei dem die Steuereinheit (8) dazu ausgebildet ist, für eine zu montierende Vorrichtung bereits abgeschlossene Montageschritte zu erfassen und einen aktuellen Montagezustand dieser Vorrichtung ausgehend von einem ursprünglichen Montagezustand und den bereits abgeschlossenen Montageschritten zu bestimmen.

11. System nach Anspruch 9 oder 10, bei dem die Steuereinheit (8) dazu ausgebildet ist, anhand der Montagevorgabe zu ermitteln, welche Montageschritte für die Vorrichtung noch durchgeführt werden müssen.

## Claims

1. A method for assembling an apparatus with a modular assembly plant (6) that has a plurality of assembly stations (M1, M2, M3,..., Mn-2, Mn-1, Mn), a material supply system (4) that comprises a plurality of goods baskets, and a transport system that comprises a plurality of transport vehicles (T1, T2,..., Tk), wherein with one assembly station (M1, M2, M3,..., Mn-2, Mn-1, Mn) respectively at least one assembly step is carried out, wherein at least one original component is provided at the beginning of the assembly, said original component defining an original assembly state of the apparatus to be assembled, wherein a plurality of assembly steps can be carried out according to an assembly setting for the apparatus to be assembled, wherein one assembly step is respectively carried out with one assembly station (M1, M2, M3,..., Mn-2, Mn-1, Mn), wherein material for carrying out the assembly step is provided to the assembly station (M1, M2, M3,..., Mn-2, Mn-1, Mn),
- wherein a current assembly state of the apparatus to be assembled is monitored,
- wherein an assembly preview is provided for the apparatus to be assembled, said assembly preview comprising specifications for at least one assembly step yet to be carried out for the apparatus to be assembled, wherein the specifications comprise information about the provision time at which each material is to be provided to an assembly station (M1, M2, M3,..., Mn-2, Mn-1, Mn) designated for carrying out the assembly step, wherein a provision timeframe starting from a current time point until the provision time point is reached is determined,
- wherein a logistics provision timeframe is determined that comprises a transport timeframe for a transport of the material from the material supply system (4) to at least one assembly station (M1, M2, M3,..., Mn-2, Mn-1, Mn) designated for the assembly by a transport vehicle (T1, T2,..., Tk),
- wherein a commissioning of a respective goods basket in the material supply system (4) is initiated for the case that a difference between the provision timeframe and the logistics provision time frame is less than a settable first threshold value,
**characterized in that**
the logistics provision timeframe comprises a commissioning timeframe for a commissioning of the material by the material supply system (4), wherein the assembly setting is made more precise and changed during the course of the method, wherein the material supply system (4) learns from the changing assembly setting and responds in a timely manner to possible expected changes of the assembly setting, wherein a control unit (8) for controlling the method has a neural network.

2. The method according to claim 1, wherein a material required for a respective assembly step (M1, M2, M3,..., Mn-2, Mn-1, Mn) is commissioned in a goods basket by the material supply system (4), wherein a transport of the material to an assembly station (M1, M2, M3,..., Mn-2, Mn-1, Mn) designated for carrying out the respective assembly step with the transport vehicle (T1, T2,..., Tk) is initiated, wherein material in the goods basket is automatically transported with the transport vehicle (T1, T2,..., Tk) from the material supply system (4) to an assembly station (M1, M2, M3,..., Mn-2, Mn-1, Mn) with which the respective assembly step is to be carried out.

3. The method according to claim 1 or 2, wherein a degree of freedom is given in a sequence of assembly steps to be carried out, wherein at least one assembly step can be carried out alternatively by a plurality of assembly stations (M1, M2, M3,..., Mn-2, Mn-1, Mn), wherein one of these possible assembly stations (M1, M2, M3,..., Mn-2, Mn-1, Mn) to which the material is transported, is selected.

4. The method according to one of the preceding claims, wherein a sequence of the assembly steps and therefore a structure of the assembly setting is varied as the method is executed.

5. The method according to one of the preceding claims, wherein an assembly station (M1, M2, M3,..., Mn-2, Mn-1, Mn) for carrying out an assembly step is provided with at least one additional component (B1, B2,..., Bm) as material, wherein the at least one original component is supplemented by the at least one additional component (B1, B2,..., Bm).

6. The method according to one of the preceding claims, wherein in the case that a difference between the provision timeframe and the transport timeframe is less than a settable second threshold value for the transport, the assembly station (M1, M2, M3,..., Mn-2, Mn-1, Mn) designated for carrying out the assembly step is finally selected and the transport of the material to this assembly station (M1, M2, M3,..., Mn-2, Mn-1, Mn) is initiated.

7. The method according to one of the preceding claims, wherein starting from the original assembly state of the apparatus, it is determined which at least one assembly step for the apparatus is completed, wherein the current assembly state of the apparatus is determined based on the at least one completed assembly state.

8. The method according to one of the preceding claims, wherein the apparatus being assembled is transported after completion of an assembly step in an assembly station (M1, M2, M3,..., Mn-2, Mn-1, Mn) to another assembly station (M1, M2, M3,..., Mn-2, Mn-1, Mn) for carrying out another assembly step.

9. A system configured for carrying out the method according to one of the preceding claims for assembling an apparatus, comprising a modular assembly plant (6) with a plurality of assembly stations (M1, M2, M3,..., Mn-2, Mn-1, Mn), a material supply system (4) with a plurality of goods baskets, a transport system with a plurality of transport vehicles (T1, T2,..., Tk), and a control unit (8) for controlling the method according to one of the preceding claims, wherein one assembly station (M1, M2, M3,..., Mn-2, Mn-1, Mn) is respectively formed to carry out at least one assembly step, wherein a plurality of assembly steps can be carried out for the apparatus to be assembled according to an assembly setting,
**characterized in that**
the control unit (8) for controlling the method has a neural network, wherein the material supply system (4) is configured to learn based on the changing assembly setting, and to respond to possible expected changes of the assembly setting in a timely manner.

10. The system according to claim 9, wherein the control unit (8) is formed to detect already completed assembly steps for an apparatus to be assembled, and to determine a current assembly state of this apparatus starting from an original assembly state and the already completed assembly steps.

11. The system according to claim 9 or 10, wherein the control unit (8) is formed to determine based on the assembly setting which assembly steps still have to be carried out for the apparatus.

## Revendications

1. Procédé d'assemblage d'un dispositif à l'aide d'une installation d'assemblage modulaire (6) présentant plusieurs stations d'assemblage (M1, M2, M3,..., Mn-2, Mn-1, Mn), d'un système d'alimentation en matériaux (4) comprenant plusieurs paniers de produits et d'un système de transport comprenant plusieurs véhicules de transport (T1, T2,..., Tk), chaque station d'assemblage (M1, M2, M3,..., Mn-2, Mn-1, Mn) réalisant au moins une étape d'assemblage, au début de l'assemblage au moins une pièce initiale étant fournie, définissant un état d'assemblage initial du dispositif à assembler, plusieurs étapes d'assemblage pouvant être réalisées pour le dispositif à assembler selon une spécification d'assemblage, chaque étape d'assemblage étant réalisée au moyen d'une station d'assemblage (M1, M2, M3,..., Mn-2, Mn-1, Mn), du matériau étant fourni à la station d'assemblage (M1, M2, M3,..., Mn-2, Mn-1, Mn) pour la réalisation de l'étape d'assemblage,
- un état d'assemblage momentané du dispositif à assembler étant surveillé,
- un aperçu d'assemblage étant fourni pour le dispositif à assembler, comprenant des données relatives à au moins une étape d'assemblage restant à réaliser pour le dispositif à assembler, les données comprenant des informations permettant de savoir quel matériau doit être fourni à une station d'assemblage (M1, M2, M3,..., Mn-2, Mn-1, Mn) prévue pour la réalisation de l'étape d'assemblage et à quel moment, une période de mise à disposition allant jusqu'au moment de la mise à disposition étant déterminée partant d'un instant momentané,
- une période de mise à disposition logistique étant déterminée, comprenant une période de transport pour un transport du matériau à partir du système d'alimentation en matériaux (4) vers au moins une station d'assemblage (M1, M2, M3,..., Mn-2, Mn-1, Mn) prévue pour l'assemblage par un véhicule de transport (T1, T2,..., Tk),
- une préparation d'un panier de produits respectif étant initiée dans le système d'alimentation en matériaux (4) au cas où une différence entre la période de mise à disposition et la période de mise à disposition logistique serait inférieure à une première valeur seuil pouvant être prédéterminée,
**caractérisé en ce que**
la période de mise à disposition logistique comprend une période de préparation pour une préparation du matériau par le système d'alimentation en matériaux (4), la spécification d'assemblage étant précisée et modifiée au cours du procédé, ledit système d'alimentation en matériaux (4) apprenant de la spécification d'assemblage susceptible de changer et réagissant à temps à d'éventuelles modifications escomptées de la spécification d'assemblage, une unité de commande (8) présentant un réseau neuronal pour commander le procédé.

2. Procédé selon la revendication 1, dans lequel le système d'alimentation de matériau (4) prépare un matériau nécessaire à une étape d'assemblage (M1, M2, M3,..., Mn-2, Mn-1, Mn) respective dans un panier de produits, un transport du matériau vers une station d'assemblage (M1, M2, M3,..., Mn-2, Mn-1, Mn) prévue pour la réalisation de l'étape d'assemblage respective au moyen du véhicule de transport (T1, T2,..., Tk) étant initié par le système d'alimentation en matériaux (4), le matériau étant transporté automatiquement dans le panier de produits par le véhicule de transport (T1, T2,..., Tk) du système d'alimentation en matériaux (4) vers une station d'assemblage (M1, M2, M3,..., Mn-2, Mn-1, Mn) destinée à réaliser l'étape d'assemblage respective.

3. Procédé selon la revendication 1 ou 2, dans lequel un degré de liberté est déterminé pour un ordre des étapes d'assemblage à réaliser, au moins une étape d'assemblage pouvant être réalisée alternativement par plusieurs stations d'assemblage (M1, M2, M3,..., Mn-2, Mn-1, Mn), une de ces stations d'assemblage (M1, M2, M3,..., Mn-2, Mn-1, Mn) possibles étant sélectionnée vers laquelle le matériau est transporté.

4. Procédé selon l'une des revendications précédentes, dans lequel un ordre des étapes d'assemblage et, par conséquent, une structure de la spécification d'assemblage peuvent varier tout au long du procédé.

5. Procédé selon l'une des revendications précédentes, dans lequel à une station d'assemblage (M1, M2, M3,..., Mn-2, Mn-1, Mn) une autre pièce (B1, B2,..., Bm) est fourni en tant que matériau pour la réalisation d'une étape d'assemblage, laquelle au moins une autre pièce (B1, B2, ..., Bm) vient compléter l'au moins une pièce initiale.

6. Procédé selon l'une des revendications précédentes, dans lequel, au cas où une différence entre la période de mise à disposition et la période de transport pour le transport serait inférieure à une deuxième valeur seuil pouvant être prédéfinie, la station d'assemblage (M1, M2, M3,..., Mn-2, Mn-1, Mn) prévue pour la réalisation de l'étape d'assemblage est sélectionnée définitivement et le transport du matériau vers cette station d'assemblage (M1, M2, M3,..., Mn-2, Mn-1, Mn) est initié.

7. Procédé selon l'une des revendications précédentes, dans lequel, partant de l'état d'assemblage initial du dispositif, il est déterminé laquelle au moins une étape d'assemblage pour le dispositif est finalisée, l'état d'assemblage momentané du dispositif étant déterminé à l'aide de l'au moins un état d'assemblage finalisé.

8. Procédé selon l'une des revendications précédentes, dans lequel le dispositif en cours d'assemblage est transporté, à la fin d'une étape d'assemblage dans une station d'assemblage (M1, M2, M3,..., Mn-2, Mn-1, Mn), vers une autre station d'assemblage (M1, M2, M3,..., Mn-2, Mn-1, Mn) pour la réalisation d'une autre étape d'assemblage.

9. Système agencé pour la réalisation du procédé selon l'une des revendications précédentes pour l'assemblage d'un dispositif, ayant une installation d'assemblage modulaire (6) ayant plusieurs stations d'assemblage (M1, M2, M3,..., Mn-2, Mn-1, Mn), un système d'alimentation en matériaux (4) équipé de plusieurs paniers de produits, un système de transport ayant plusieurs véhicules de transport (T1, T2,..., Tk) et une unité de commande (8) permettant de commander le procédé selon l'une des revendications précédentes, une station d'assemblage (M1, M2, M3,..., Mn-2, Mn-1, Mn) étant respectivement configurée de manière à réaliser au moins une étape d'assemblage, plusieurs étapes d'assemblages pouvant être réalisées pour le dispositif à assembler selon une spécification d'assemblage,
**caractérisé en ce que**
l'unité de commande (8) destinée à commander le procédé présente un réseau neuronal, le système d'alimentation en matériaux (4) étant agencé de manière à apprendre de la spécification d'assemblage susceptible de changer et à réagir à temps à d'éventuelles modifications escomptées de la spécification d'assemblage.

10. Système selon la revendication 9, dans lequel l'unité de commande (8) est configurée de manière à détecter des étapes d'assemblage déjà finalisées pour un dispositif à assembler et de manière à déterminer un état d'assemblage momentané de ce dispositif, partant d'un état d'assemblage initial et des étapes d'assemblage déjà finalisées.

11. Système selon la revendication 9 ou 10, dans lequel l'unité de commande (8) est conçue pour déterminer, à l'aide de la spécification d'assemblage, lesquelles étapes d'assemblage restent à être réaliser pour le dispositif.
